(19) **Europäisches Patentamt / European Patent Office / Office européen des brevets**

(11) **EP 3 290 861 B1**

(12) **EUROPÄISCHE PATENTSCHRIFT**

(45) Veröffentlichungstag und Bekanntmachung des Hinweises auf die Patenterteilung:
**26.06.2019   Patentblatt 2019/26**

(51) Int Cl.:
**G01B 21/04** (2006.01)          **G01B 11/00** (2006.01)
**G01B 11/27** (2006.01)          **B25J 13/08** (2006.01)

(21) Anmeldenummer: **17179263.3**

(22) Anmeldetag: **03.07.2017**

(54) **SENSORANLAGE MIT EINER OPTISCHEN SENSOREINHEIT UND AUTOMATISIERUNGSANLAGE**

SENSOR UNIT WITH AN OPTICAL SENSOR UNIT AND AUTOMATION SYSTEM

INSTALLATION DE DÉTECTION COMPRENANT UNE UNITÉ DE DÉTECTION OPTIQUE ET INSTALLATION D'AUTOMATISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2016   DE 102016216196**

(43) Veröffentlichungstag der Anmeldung:
**07.03.2018   Patentblatt 2018/10**

(73) Patentinhaber: **Robert Bosch GmbH**
**70442 Stuttgart (DE)**

(72) Erfinder:
• **Junker, Stefan**
  **71229 Leonberg (DE)**
• **Frangen, Joachim**
  **74081 Heilbronn (DE)**

(56) Entgegenhaltungen:
**EP-A1- 2 511 656          DE-A1-102004 061 764**
**DE-A1-102011 011 360     US-A- 4 753 569**
**US-A1- 2015 025 683**

EP 3 290 861 B1

**Beschreibung**

Stand der Technik

Die Erfindung betrifft eine Sensoranlage mit den Merkmalen des Oberbegriffs nach Anspruch 1 und eine Automatisierungsanlage nach Anspruch 9.

Die Positionsbestimmung von Objekten in mehreren Freiheitsgraden ist eine häufig gestellte Aufgabe, zum Beispiel zur Regelung oder Beobachtung der Bewegung von Maschinen, Maschinenteilen, Waren oder Erzeugnissen. Typische Anwendungen für die Positionsbestimmung sind Positioniersysteme, wie zum Beispiel in Industrierobotern, und Transportsysteme. Diese Systeme umfassen Antriebe, die einen Läufer auf eine vorgegebene Soll-Position fahren und Sensoren zur Positionsbestimmung des Läufers. Häufig wird dazu jede Dimension eines Positioniersystems mit einem separaten Sensor erfasst. Zur Erfassung der mehrdimensionalen Position werden meist mehrere eindimensional messende Messaufnehmer eingesetzt, die räumlich verteilt und zeitlich synchronisiert sind.

Die Druckschrift DE 102008042261 A1 betrifft ein Verfahren zur flexiblen Handhabung von Objekten mit einem Handhabungsgerät und eine Anordnung für ein Handhabungsgerät. Vorgesehen ist ein räumliches Navigieren des Handhabungsgerätes zum Greifen und/oder Ablegen eines Objektes in eine Objektaufnahme mittels eines Sensorsystems. Das sensorgeführte Navigieren erfolgt über den kompletten Handhabungsprozess. Dabei werden durch eine oder mehrere Einzelmessungen ein oder mehrere Messwerte über die Lage des Objektes und/oder der Objektaufnahme zu einem Bezugssystem erhalten. Für die eine oder mehrere Einzelmessungen werden eine oder mehrere Kameras mit einer strukturierten Beleuchtung oder für mehrere Einzelmessungen eine oder mehrere Kameras mit einer strukturierten Beleuchtung und einer homogenen Beleuchtung vorgesehen.

In US 4 753 569 A sind ein Verfahren und eine Vorrichtung zum computerbasierten Kalibrieren einer Roboteranlage offenbart. Ein Roboterarm ist dabei in einem Arbeitsraum bewegbar, wobei in dem Arbeitsraum eine Referenzmarke, umfassend drei bzw. vier Punkte, angeordnet ist. Durch die Aufnahme der Referenzmarke, insbesondere basierend auf der Information, wann die Referenzmarke im Bild erscheint, kann der Roboterarm positioniert werden.

Die Druckschrift US 2015/0025683 A1 beschreibt ein Robotersystem bei dem ein optischer Sensor die Position bestimmt. Auf dem Roboterarm ist eine Markierung aus Punkten angebracht, die von dem optischen Sensor detektiert wird. Basierend auf der Markierung wird die Orientierung bestimmt, wobei die Markierung zusätzlich ein Dreieck zur Abstandsmessung umfasst.

In EP 2 511 656 A1 ist ein Vermessungssystem zur Bestimmung von 3D-Koordinaten beschrieben. Das Vermessungssystem weist eine Abtastvorrichtung, eine Auswerteeinheit und eine Referenzierungsanordnung auf. Die Abtastvorrichtung wird von einem unbemannten Fluggerät getragen.

Die Druckschrift DE 10 2011 011 360 A1, die den nächstkommenden Stand der Technik bildet, beschreibt eine Vorrichtung zur Bestimmung der 3D-Koordinaten eines Objektes mittels eines Projektors und Referenzmarken. Der Projektor projetziert ein Streifenmuster auf das Objekt, wobei mittels einer Kamera ein Bild des bestrahlten Objektes aufgenommen wird. Basierend auf dem Bild wird die 3D-Lage des Objektes bestimmt.

Offenbarung der Erfindung

Im Rahmen der Erfindung wird eine Sensoranlage mit den Merkmalen des Anspruchs 1 und eine Automatisierungsanlage nach Anspruch 9 vorgeschlagen. Bevorzugte oder vorteilhafte Ausführungsformen der Erfindung sowie andere Erfindungskategorien ergeben sich aus den weiteren Ansprüchen, der nachfolgenden Beschreibung sowie den beigefügten Figuren.

Erfindungsgemäß wird eine Sensoranlage vorgeschlagen, vorzugsweise für eine Automatisierungsanlage mit einem Funktionsmodul. Die Automatisierungsanlage ist insbesondere ausgebildet in der Fertigung, Produktion und/oder in der Automatisierung von anderen Prozessen, wie zum Beispiel in der Labor- und/oder Prüfautomatisierung eingesetzt zu werden. Insbesondere kann die Automatisierungsanlage Teile eines Produktionsprozesses und/oder einen gesamten Produktionsprozess von Werkstücken automatisieren, wie zum Beispiel die Fertigung und Montage von Werkstücken.

Die Sensoranlage umfasst mindestens eine Auswerteeinheit. Die mindestens eine Auswerteeinheit ist insbesondere als ein Mikrocontroller, Mikrochip und/oder Mikroprozessor ausgebildet. Vorzugsweise ist die Auswerteeinheit als ein Computer ausgebildet, insbesondere ist sie als embedded Computer ausgebildet. In einer besonders bevorzugten Ausgestaltung ist die Auswerteeinheit in der Automatisierungsanlage und/oder dem Funktionsmodul integriert.

Die Sensoranlage umfasst eine optische Sensoreinheit ausgebildet zur Aufnahme mindestens eines Bildes eines Markierungsbereiches mit optischen Markierungen. Insbesondere kann die optische Sensoreinheit in dem mindestens einen Funktionsmodul integriert sein. Vorzugsweise ist die optische Sensoreinheit als Kamera ausgebildet. Die Kamera ist zur Aufnahme mindestens eines Bildes des Markierungsbereichs ausgebildet. Besonders bevorzugt ist die Kamera zur Aufnahme von Bildern im sichtbaren Wellenlängenbereich ausgebildet. Die Kamera kann z. B. als eine CCD-Kamera oder als eine CMOS-Kamera oder in einer anderen Bauart ausgebildet sein. Die Sensoreinheit kann

EP 3 290 861 B1

beispielsweise im Inneren des Funktionsmoduls angeordnet sein und/oder an einer Oberfläche des Funktionsmoduls angeordnet sein. Alternativ und/oder ergänzend kann die optische Sensoreinheit so angeordnet sein, dass die optische Sensoreinheit das mindestens eine Funktionsmodul im Markierungsbereich im Bild abbildet. Die optische Sensoreinheit kann das aufgenommene Bild digital und/oder analog bereitstellen. Insbesondere umfasst die Sensoranlage Elektronik, wobei die Elektronik beispielsweise einen Mikrocontroller und/oder Programmmittel wie zum Beispiel eine Framegrabber und Treibersoftware umfasst.

Die optischen Markierungen sind vorzugsweise gleichmäßig im Markierungsbereich angeordnet. Beispielsweise sind die optischen Markierungen matrixartig mit äquidistanten Abständen im Markierungsbereich verteilt. Die optischen Markierungen sind beispielsweise als ein Etikett im Markierungsbereich angebracht. Insbesondere können die optischen Markierungen auf einem Objekt, Werkstück und/oder Bauteil der Automatisierungsanlage angebracht sein.

Die optischen Markierungen weisen vorzugsweise eine identische Kontur auf. Beispielsweise sind die optischen Markierungen rechteckig, quadratisch oder kreisförmig. Insbesondere umfassen die optischen Markierungen einen Maßstab. Eine optische Markierung ist vorzugsweise ein rechteckiger, quadratischer oder kreisförmiger Fleck und/oder Bereich. Insbesondere kann eine optische Markierung auch mehrere Strukturen, wie zum Beispiel Rechtecke, Linien und/oder Punkte umfassen. Besonders bevorzugt umfasst eine optische Markierung mehrere Punkte (engl. Dot) und bildet einen Dotcode.

Das von der Sensoreinheit aufgenommene, mindestens eine Bild umfasst insbesondere einen Ausschnitt des Markierungsbereiches. Alternativ und/oder ergänzend kann das aufgenommene, mindestens eine Bild den gesamten Markierungsbereich umfassen. Der Markierungsbereich kann eine ebene und/oder gekrümmte Fläche sein und ist beispielsweise der Boden einer Werkshalle und/oder der Boden des Anlagenbereichs. Das Funktionsmodul ist insbesondere im Markierungsbereich anordenbar.

Die optischen Markierungen umfassen Positionsinformationen zu ihrer Position im Markierungsbereich. Die Positionsinformationen umfassen die Koordinaten der Position der jeweiligen optischen Markierung im Markierungsbereich. Die optischen Markierungen können die Koordinaten direkt angeben, zum Beispiel als Ziffern oder Zeichen, und/oder die Koordinaten codiert umfassen. Insbesondere sind die Positionsinformationen als digitaler Code in den optischen Markierungen codiert. Die Koordinaten der Position der optischen Markierungen im Markierungsbereich sind vorzugweise in einem 2-dimensionalen kartesischen Koordinatensystem angegeben. Alternativ und/oder ergänzend sind die optischen Markierungen in einem 3-dimensionalem kartesischen Koordinatensystem angegeben.

Die Auswerteeinheit ist ausgebildet, auf Basis des mindestens einen Bildes, die Lage der Sensoreinheit bezüglich des Markierungsbereiches in sechs Lagefreiheitsgraden zu bestimmen. Vorzugsweise umfasst die Auswerteeinheit ein Computerprogramm und/oder einen Algorithmus mit Programmcode-Mitteln zum Bestimmen der Lage der Sensoreinheit bezüglich des Markierungsbereiches in sechs Freiheitsgraden, wenn das Computerprogramm auf einem Computer und/oder Rechner ausgeführt wird. Die sechs Lagefreiheitsgrade umfassen insbesondere drei translatorische Freiheitsgrade und drei rotatorische Freiheitsgrade. Vorzugsweise ist die Auswerteeinheit ausgebildet, die Lage der Sensoreinheit in einem 3-dimensionalen Raum anzugeben, wobei das Koordinatensystem und/oder der der Nullpunkt des zur Beschreibung des 3-dimensionalen Raumes verwendeten Koordinatensystems beliebig sind. Insbesondere ist das Koordinatensystem als ein Weltkoordinatensystem ausgebildet. Die Bestimmung der translatorischen Lage durch die Auswerteeinheit ist vorzugsweise genauer als 0,25 mm und im Speziellen genauer als 0,1 mm. Insbesondere ist die Auswerteeinheit datentechnisch mit der Sensoreinheit verbunden. Insbesondere kann das mindestens eine Bild mehrere Markierungsbereiche umfassen, so dass die relative Position der Markierungsbereiche zueinander ermittelbar ist.

Der Erfindung liegt die Überlegung zugrunde, eine Sensoranlage mit einer optischen Sensoreinheit bereitzustellen, mit der die absolute Position in Bezug zu einer optischen Markierung in bis zu sechs Freiheitsgraden auf Basis eines Bildes bestimmbar ist. Die Integration einer solchen Sensoreinheit in beispielsweise mechatronische Systeme und/oder Funktionsmodule ermöglicht es, komplexe Automatisierungsanlagen aus den Funktionsmodulen aufzubauen, wobei die Position und/oder Lage der Funktionsmodule in allen Freiheitsgraden von einer Sensoreinheit bestimmt wird. Die Verwendung der optischen Sensoreinheit und Auswerteeinheit zur Positionsbestimmung ermöglicht es, die mehrdimensionale Position mit nur einem optischen Messaufnehmer zu erfassen. Gegenüber einem System mit verteilten Sensoren zur Erfassung einzelner Freiheitsgrade reduzieren sich der Installationsaufwand und die Komplexität des Gesamtsystems. Dies führt zu Kostenvorteilen und einer Zeiteinsparung beim Aufbau neuer Modulanordnungen. Es wird somit eine Sensoranlage vorgeschlagen, die in Module integrierbar ist und es ermöglicht, schnell und einfach die Lage und/oder unterschiedliche Anordnungen der Module in einem Bereich zu bestimmen.

Erfindungsgemäß umfasst die Auswerteeinheit eine Grobauswerteeinheit. Die Grobauswerteeinheit ist ausgebildet, die Positionsinformation von mindestens einer optischer Markierung im aufgenommenen Bild auszulesen. Insbesondere kann die Grobauswerteeinheit zum dechiffrieren und/oder decodieren der Positionsinformation der mindestens einen optischen Markierung im aufgenommen Bild ausgebildet sein. Die Grobauswerteeinheit ist ausgebildet die ausgelesene Positionsinformation bereitzustellen, wobei die bereitgestellte Positionsinformation beispielsweise als x-Koordinate und y-Koordinate der jeweiligen optischen Markierung ausgebildet ist. Insbesondere ist die Grobauswerteeinheit ausgebildet, die dem Bildmittelpunkt nächstgelegene optische Markierung auszulesen. Die Grobauswerteeinheit kann ausgebildet sein, durch Auslesen von mindestens einer optischen Markierung im Bild, die Leserichtung und/oder die Lage Achsen der matrixartigen Anordnung der optischen Markierungen im Markierungsbereich zu bestimmen. Vorzugsweise kann durch Auslesen mehrerer optischer Markierungen im Bild auch die Lage und die flächige Erstreckung, des im Bild aufgenommenen Bereiches, bestimmt werden.

Besonders bevorzugt ist es, dass die Auswerteeinheit eine Feinauswerteeinheit umfasst. Die Feinauswerteeinheit ist ausgebildet, die Lage der Sensoreinheit auf Basis der Aufnahmeperspektive der Sensoreinheit auf den Markierungsbereich zu bestimmen. Die Feinauswerteeinheit ist insbesondere ausgebildet, die durch die gerastert angeordneten optischen Markierungen festgelegte Grobposition zu verfeinern. Insbesondere ist die Feinauswerteeinheit ausgebildet, den Bereich zwischen optischen Markierungen zu interpolieren.

In einer besonders bevorzugten Ausgestaltung definiert die Sensoreinheit eine optische Achse. Insbesondere definiert die optische Achse die Blickrichtung der Sensoreinheit. Die optische Achse schneidet den Markierungsbereich in einem Aufpunkt, wobei der Aufpunkt Teil des aufgenommenen Bildes ist. Die Feinauswerteeinheit ist insbesondere ausgebildet, die Lage der Sensoreinheit auf Basis der Lage des Aufpunktes in dem Markierungsbereich zu bestimmen.

Erfindungsgemäß umfasst die Auswerteeinheit eine Mustererkennungseinheit. Die Mustererkennungseinheit ist ausgebildet, ein geometrisches Muster aus mindestens einer optischen Markierung in dem aufgenommenen Bild zu erfassen und/oder zu suchen. Das geometrische Muster ist vorzugsweise als eine regelmäßige geometrische Figur ausgebildet und beispielsweise ein Quadrat, ein Rechteck, ein Viereck, ein Dreieck oder ein Kreis. Beispielsweise sind immer vier nächstgelegene optische Markierungen zu einem Viereck ergänzbar, welches dann das geometrische Muster bildet. Insbesondere bildet die Länge einer vorbestimmten und eindeutigen Seite des geometrischen Musters eine Basislänge b, wie zum Beispiel die Seitenlänge eines Quadrates oder die Breite eines Vierecks als geometrisches Muster. Die Basislänge b kann insbesondere einen Maßstab und/oder Abbildungsmaßstab bilden.

Das geometrische Muster wird beispielsweise von einer einzelnen optischen Markierung gebildet. Alternativ und/oder ergänzend umfasst das geometrische Muster mehrere optische Markierungen und ist beispielsweise als ein Rechteck mit m optischen Markierungen in der Länge des Rechtecks und n optischen Markierungen in der Breite des Rechtecks ausgebildet, wobei m und n natürliche Zahlen sind. Insbesondere kann das geometrische Muster bei einer Veränderung der Winkellage der Sensoreinheit zum Markierungsbereich verzerrt im Bild abgebildet werden, wobei zum Beispiel, aus einem Quadrat bei schräger Betrachtung ein Parallelogramm werden kann.

Das Sensorsystem umfasst zum scharfen und kontrastreichen Abbilden der optischen Markierungen ein Abbildungssystem mit einer Brennweite f. Das Abbildungssystem ist beispielsweise ein Objektiv und/oder ein Linsensystem. Die Auswerteeinheit umfasst eine Abstandsauswerteeinheit ausgebildet zum Bestimmen des Abstands der Sensoreinheit zum Markierungsbereichs auf Basis der Brennweite f und einer Verzerrung des Abbildungsmaßstabs und geometrischen Musters in dem mindestens einen Bild. Insbesondere ist das mindestens eine Bild in Zentralperspektive aufgenommen. Vorzugsweise ist die Abstandsauswerteeinheit ausgebildet, den Abstand auf Basis der Abbildungsgleichung bzw. Linsengleichung zu bestimmen. Insbesondere bestimmt die Abstandsauswerteeinheit den Abstand auf Basis der Basislänge b' im Bild, der Breite mindestens einer optischen Markierung und der Brennweite f.

Erfindungsgemäß umfasst die Auswerteeinheit eine Winkelbestimmungseinheit ausgebildet zur Bestimmung der rotatorischen Freiheitsgrade der Sensoreinheit bezüglich des Markierungsbereiches auf Basis einer Verzerrung des geometrischen Musters in dem mindestens einen Bild. Als Verzerrung wird insbesondere die Veränderung des geometrischen Musters bei gegebener Winkellage gegenüber dem geometrischen Muster bei senkrechter Draufsicht der Sensoreinheit auf den Markierungsbereichs verstanden.

Besonders bevorzugt ist es, dass die Sensoreinheit eine Beleuchtungseinheit umfasst. Die Beleuchtungseinheit ist ausgebildet, den Markierungsbereich zu beleuchten und/oder Teile des Markierungsbereiches zu beleuchten, wie zum Beispiel den Bereich des Markierungsbereiches, von dem das Bild aufgenommen wird. Die Beleuchtungseinheit ist insbesondere im Dauerbetrieb und/oder im Blitzbetrieb betreibbar. Vorzugsweise umfasst die Beleuchtungseinheit eine Leuchtdiode zur Beleuchtung. Insbesondere umfasst die Beleuchtungseinheit einen halbkugelförmigen Leuchtschirm, der zum Beispiel als Ulbrichtkugel ausgebildet ist. Ferner kann die Sensoreinheit eine Fremdlichtabschirmung umfassen um Streu- und Störlichteinfall auf die Sensoreinheit zu vermeiden. Die Beleuchtungseinheit und/oder Fremdlichtabschirmung dienen einer kontrastreichen und störungsfreien Aufnahme von Bildern des Markierungsbereichs durch die Sensoreinheit.

In einer weiteren möglichen Ausgestaltung umfasst die optische Sensoreinheit einen Inertialsensor. Der Inertialsensor ist insbesondere in dem Funktionsmodul angeordnet und in festem mechanischem Kontakt mit dem Funktionsmodul. Der Inertialsensor umfasst vorzugsweise eine Kombination von mindestens einem Beschleunigungssensor und mindestens einem Drehratensensor. Der Inertialsensor ist insbesondere zur Bestimmung von sechs Freiheitsgraden ausgebildet. Alternativ kann der Inertialsensor ausgebildet sein, weniger als sechs Freiheitsgrade zu bestimmen, wie zum Beispiel nur die translatorischen und/oder rotatorischen Freiheitsgrade. Vorzugsweise ist der Inertialsensor ausgebildet seine Messsingale und/oder Messdaten der Auswerteeinheit bereitzustellen, wobei die Auswerteeinheit die Lage der Sensoreinheit bestimmt. Insbesondere ist die Auswerteeinheit ausgebildet, bei ausgefallener optischer Sensoreinheit und/oder Detektionsproblemen der optischen Markierungen die Lage auf Basis der Messsignale und/oder Messdaten des Inertialsensors zu bestimmen.

In einer besonders bevorzugten Ausgestaltung der Erfindung umfassen die optischen Markierungen die Positionsinformationen als optischen Code. Der optische Code kann digital ausgebildet sein, zum Beispiel als Schwarz-Weiß-Code. Alternativ und/oder ergänzend ist der optische Code als ein Graustufencode oder als Farbcode ausgebildet. Vorzugsweise sind die optischen Markierungen als 2-dimensionale optische Codes ausgebildet. Insbesondere weisen alle optischen Markierungen eine identische Kontur auf. Beispielsweise können die optischen Markierungen als Barcodes mit einheitlicher Länge und Breite oder als ShotCode mit einheitlichem Durchmesser ausgebildet sein. Der optische Code kann auf einer flachen Ebene oder einer gekrümmten Ebene aufgebracht sein.

Vorzugsweise sind die optischen Markierungen als DataMatrix-Code (DMC) ausgebildet. Insbesondere ist die Positionsinformation in dem jeweiligen DMC codiert. Alternativ und/oder ergänzend sind die optischen Markierungen als QR-Code, Micro-QR-Code, Secure-QR-Code (SQRC), iQR-Code oder Frame QR Code ausgebildet.

In einer besonders bevorzugten Ausgestaltung der Erfindung umfasst das geometrische Muster eine optische Markierung im aufgenommenen Bild. Vorzugsweise wird das geometrische Muster von einer optischen Markierung im Bild gebildet. Insbesondere ist die geometrische Figur für DM-Codes als optische Markierung ein Viereck, wobei für eine senkrechte Draufsicht auf die DM-Codes das geometrische Muster ein Quadrat ist und für eine schiefe Draufsicht auf die DM-Codes das geometrische Muster ein Parallelogramm und/oder Raute ist.

In einer weiteren möglichen Ausgestaltung der Erfindung umfasst das geometrische Muster eine Kombination von mehreren dergleichen optischen Codes. Vorzugsweise ist das geometrische Muster ein Viereck mit m optischen Markierungen in jede Erstreckungsrichtung, wobei m eine natürliche Zahl ist. Alternativ und/oder ergänzend ist die optische Markierung ein Viereck mit Länge und Breite, wobei das Viereck m optische Markierungen in der Länge umfasst und n optische Markierungen in der Breite umfasst, wobei m ungleich n und wobei m und n natürliche Zahlen sind.

Einen weiteren Gegenstand der Erfindung betrifft eine Automatisierungsanlage, wobei die Automatisierungsanlage mindestens ein Funktionsmodul und eine Sensoranlage nach einem der Ansprüche 1 - 8 umfasst. Das mindestens eine Funktionsmodul ist zur Durchführung von mindestens einer Funktion und/oder Fähigkeit ausgebildet.

Vorzugsweise ist die Sensoreinheit in dem Funktionsmodul angeordnet. Besonders bevorzugt ist die Anordnung der optischen Sensoreinheit in dem Funktionsmodul, wobei die Auswerteeinheit ausgebildet, die Position und/oder Lage des mindestens einen Funktionsmoduls zu bestimmen. Die Auswerteeinheit ist ausgebildet die Lage des mindestens einen Funktionsmoduls relativ zum Markierungsbereich in sechs Lagefreiheitsgraden zu bestimmen. Insbesondere kann die Sensoreinheit außerhalb der Funktionsmodule angeordnet sein und beispielsweise ein Funktionsmodul als Bild aufnehmen, wobei die Auswerteeinheit ausgebildet ist, die Lage und/oder Position des Funktionsmodul relativ zum Markierungsbereich zu bestimmen. Vorzugsweise ist die optische Sensoreinheit angeordnet, mindestens zwei Funktionsmodule im Bild aufzunehmen, wobei die Auswerteeinheit die Position und/oder Lage der mindestens zwei Funktionsmodule zum Markierungsbereich bestimmt und/oder die relative Lage der mindestens zwei Funktionsmodule zueinander bestimmt.

Das mindestens eine Funktionsmodul ist insbesondere ein mechatronisches Objekt. Das Funktionsmodul weist vorzugsweise mindestens eine Funktion und/oder Fähigkeit auf, wobei die Funktion und/oder Fähigkeit zur Ausführung von Fertigungs-, Montage- oder sonstigen Produktionsprozessen in der Sensoranlage ausgebildet sind. Die Funktion und/oder Fähigkeit umfasst beispielsweise Bohren, Spannen, Greifen, Vermessen, Transportieren und/oder Zuführen. Die Funktionsmodule sind insbesondere steuerbar. Die Kombination mehrerer Funktionsmodule in der Sensoranlage erlaubt beispielsweise die Ausführung komplexerer Automatisierungsprozesse, indem die spezifischen Fähigkeiten mehrere autarker Funktionsmodule zu höherwertigen Fähigkeiten kombiniert werden und/oder die Funktionsmodule zur Ausübung dieser höherwertigen Fähigkeiten miteinander interagieren.

Mögliche Ausgestaltungsformen lassen sich auch wie folgt beschreiben:
Alternativ und/oder ergänzend ist die Genauigkeit der Positionsbestimmung mit der Sensoranlage erhöhbar durch Mittelung über mehrere optische Markierungen und/oder Blobs. Beispielsweise durch Berechnung des Bildmittelpunktes und/oder Bildecken als Schwerpunkt mehrerer Blob- und/oder Markierungspositionen. Insbesondere ist die Auswerteeinheit ausgebildet, numerische und/oder iterative Verfahren zur Positionsbestimmung anzuwenden.

In einer möglichen Ausgestaltung der Erfindung ist die Sensoranlage ausgebildet, eine Anordnung von einer/m oder mehreren optischen Markierungen und/oder Maßstäben zu erfassen und auszuwerten, wobei die Sensoranlage eine oder mehrere optische Sensoreinheiten umfasst. Dies kann beispielsweise zum Erfassen von mehr als sechs Freiheitsgraden dienen, wie zum Beispiel bei bewegten Objekten mit mehreren Freiheitsgraden. Ferner kann die Messgenauigkeit durch simultanes Erfassen eines zu vermessenden Objektes aus unterschiedlichen Richtungen gesteigert werden. Insbesondere ermöglicht dies ein präzises Vermessen von großen Objekten durch simultanes Erfassen eines Objektes an weit entfernten Orten.

Besonders bevorzugt ist, dass die optische Sensoreinheit eine Split-field Optik zur Abbildung mehrere Objekte auf einem Bildsensor und/oder zur mehrfachen Abbildung eines Objektes aus unterschiedlichen Richtungen umfasst. Ferner ist der Einsatz der Sensoranlage mit der Anwendung von anderen bildgebenden Verfahren möglich, wie zum Beispiel in der Röntgentechnik zur Ermittlung der genauen Position eines Patienten oder Prüfobjektes, beispielsweise ist die optische Sensoreinheit dabei eine röntgenoptische Sensoreinheit.

Ferner kann die Auswerteeinheit eine Diagnosefunktion umfassen, um beispielsweise unplausiblen Bildinhalt, wie zum Beispiel aufgrund einer Verschmutzung des Markierungsbereiches, zu erkennen. Auf diese Weise kann die Sensoranlage neben den Positionswerten auch eine Zustandsinformation über die Validität der Messgrößen ermitteln. Diese Validitätsinformation kann zusätzlich zu den Messgrößen an der Schnittstelle einem übergeordneten System bereitgestellt werden. Bei Verwendung von optischen Markierungen mit redundant codierter Information oder durch Verarbeitung zusätzlicher Informationen wie der des Inertialsensors können im Fehlerfall auch Ersatzwerte berechnet und bereitgestellt werden, um die Systemfunktion aufrechtzuerhalten

Eine mögliche Ausgestaltung der Erfindung nutzt den Inertialsensor zur Steigerung der zeitlichen Sensorauflösung. Beispielsweise ist der Inertialsensor ausgebildet, die Linearbeschleunigung in drei translatorischen und die Winkelgeschwindigkeit in drei rotatorischen Freiheitsgraden zu erfassen, wobei insbesondere durch mathematische Integration der Sensorsignale die Relativposition und/oder Relativlage ermittelbar ist, allerdings ohne absoluten Bezug zu einem Maßstab und/oder einer optischen Markierung. Aufgrund des genauigkeitsbedingten Driftverhaltens bei der Integration nimmt insbesondere der Messfehler über der Messdauer zu. Um die Driftfehler zu minimieren, kann jede valide Messinformation der optischen Sensoreinheit genutzt werden, um den Lage- und/oder Positionswert am Ausgang des Integrators darauf zu kalibrieren.

Dann kann insbesondere der Inertialsensor-Positionswert und/oder Lagewert verwendet werden, um die zeitliche Auflösung des absoluten Positionswertes, gewonnen durch die optische Sensoreinheit, zu erhöhen. Beträgt beispielsweise die Ausgabefrequenz der optischen Sensoreinheit 50Hz, kann diese auf 500Hz erhöht werden, indem die vom Integrator mit 500Hz gelieferten Lage- und/oder Positionswerte die zeitlichen Lücken zwischen zwei aufeinanderfolgenden Absolut-Positionswerten füllen.

Besonders bevorzugt ist die zusätzliche Nutzung der Sensoranlage als Identifikationssensor, indem in den optischen Markierungen eingebettete oder separat vorhandene Zusatzinformationen gelesen werden, die eine Identifikation der optischen Markierungen und/oder eines Objektes erlauben.

Weitere Merkmale, Vorteile und Wirkungen der Erfindung ergeben sich aus der nachfolgenden Beschreibung bevorzugter Ausführungsbeispiele der Erfindung sowie der beigefügten Figuren. Dabei zeigen:

Figur 1 eine Sensoranlage mit einem Funktionsmodul;

Figur 2 ein Schnittbild einer Sensoranlage mit integrierter Elektronik;

Figur 3 ein Blockschaltbild der Elektronik der Sensoranlage;

Figur 4 eine mögliche Anordnung der optischen Sensoranordnung relativ zum Markierungsbereich;

Figuren 5a, 5b und 5c Bilder des Markierungsbereiches für unterschiedliche Lageparameter mit gleichförmigen Punkten als optische Markierungen, die ein quadratisches Punktraster bilden;

Figur 6 ein Bild des Markierungsbereiches dargestellt als Punktraster

Figuren 7a und 7b ein Bild des Punktrasters mit ergänzten Verbindungsvektoren

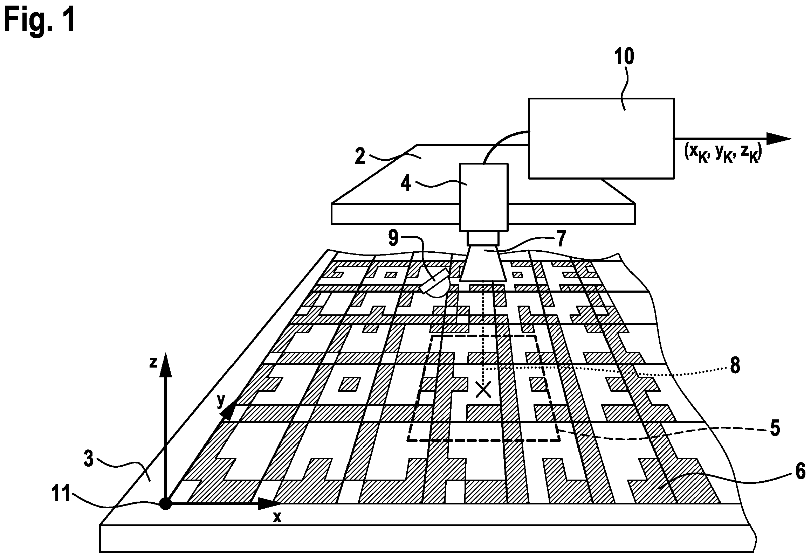

Figur 1 zeigt eine Sensoranlage 1 zur Automatisierung und Durchführung von Fertigungsschritten in einem Fertigungsprozess und/oder Fertigungslinie. Die Sensoranlage 1 umfasst ein Funktionsmodul 2, wobei das Funktionsmodul 2 beabstandet von einem Markierungsbereich 3 angeordnet ist. Das Funktionsmodul 2 umfasst eine optische Sensoreinheit 4, wobei die optische Sensoreinheit 4 als eine Kamera bzw. Überwachungskamera ausgebildet ist. Die optische Sensoreinheit 4 ist mit Blickrichtung zum Markierungsbereich 3 angeordnet, so dass die optische Sensoreinheit 4 mindestens ein Bild 5 vom Markierungsbereich 3 aufnehmen kann. Der Markierungsbereich 3 umfasst mehrere optische Markierungen 6. Für ein scharfes und kontrastreiches Aufnehmen des Markierungsbereiches 3 und der optischen Markierungen 6 durch die optische Sensoreinheit 4, umfasst die optische Sensoreinheit 4 eine optische Abbildungseinheit 7. Insbesondere definiert die optische Sensoreinheit 4 und die optische Abbildungseinheit 7 jeweils eine optische Achse 8, wobei beide optischen Achsen 8 in diesem Ausführungsbeispiel zusammen fallen. In diesem Ausführungsbeispiel der Erfindung steht die optische Achse 8 der optischen Sensoreinheit 4 senkrecht auf der Fläche des Markierungsbereiches 3.

Die optische Sensoreinheit 4 umfasst eine Beleuchtungseinheit 9, wobei die Beleuchtungseinheit 9 in unmittelbarer Nähe zur optischen Abbildungseinheit 4 angeordnet ist. Ferner ist die Beleuchtungseinheit 9 so angeordnet, dass sie den Markierungsbereich 3 ausleuchten kann, so dass eine kontrastreiche Abbildung des Markierungsbereiches 6 durch die optische Sensoreinheit 4 ermöglicht wird.

Die Sensoranlage 1 umfasst eine Auswerteeinheit 10, wobei die Auswerteeinheit 10 mit der optischen Sensoreinheit 4 datentechnisch verbunden ist. Die Auswerteeinheit 10 ist beispielsweise als ein Mikrocontroller in das Funktionsmodul 2 integriert. Die Auswerteeinheit 10 ist ausgebildet, auf Basis des durch die optische Sensoreinheit 4 aufgenommenen mindestens einen Bildes 5 des Markierungsbereiches 3 die Position und/oder Lage des Funktionsmoduls 2 zu bestimmen. Die Position und/oder Lage kann als absolute Lage in einem dreidimensionalen Raum angegeben werden und/oder als relative Lage zum Markierungsbereich 3 bestimmt werden. Die Positions- und/oder Lagebestimmung im dreidimensionalen Raum erfolgt durch die Auswerteeinheit beispielsweise durch Extraktion der Koordinaten $(x_K, y_K, z_K)$ $(\phi_1, \phi_2, \phi_3)$ der Sensoreinheit 4.

Der Markierungsbereich 3 ist als ein ebener und flächiger Bereich ausgebildet, wobei der Markierungsbereich 3 beispielsweise vom Boden einer Fabrikhalle oder eines Fertigungsbereiches gebildet werden kann. Innerhalb des Markierungsbereiches 3 sind in regelmäßigen Abständen optische Markierungen 6 angeordnet. In diesem Ausführungsbeispiel sind optischen Markierungen 6 als zweidimensionale optische Markierungen 6 ausgebildet und symbolisieren einen Dotcode wie beispielsweise Data Matrix oder QR.

Jede der optischen Markierungen 6 umfasst die Positionsinformation zu ihrer Position innerhalb des Markierungsbereiches 3. Insbesondere umfasst jede optische Markierung mehrere Punkte und/oder Dots, wobei beispielsweise die Punkte und/oder Dots innerhalb einer optischen Markierung einen Dotcode bilden. Die Positionsinformationen können beispielsweise als Koordinaten (x, y) dargestellt werden, wobei die Koordinaten (x, y) in einem zweidimensionalen kartesischen Koordinatensystem 10 bestimmt werden, welches in der Ebene des Markierungsbereiches 3 liegt. Dieses zweidimensionale kartesische Koordinatensystem 10 kann zu einem dreidimensionalen kartesischen Koordinatensystem 10 ergänzt werden, wobei die z-Achse senkrecht auf der x-y-Ebene und/oder des Markierungsbereiches 3 steht. Die z-Achse dient insbesondere der Beschreibung des Abstandes des Funktionsmoduls 2 und/oder der optischen Sensoreinheit 4 von dem Markierungsbereich 3. Die Auswerteeinheit 10 ist ausgebildet, die Position und/oder die Lage des Funktionsmoduls 2 und/oder der optischen Sensoreinheit 4 in den Koordinaten (x,y,z) des kartesischen Koordinatensystems 11 zu bestimmen.

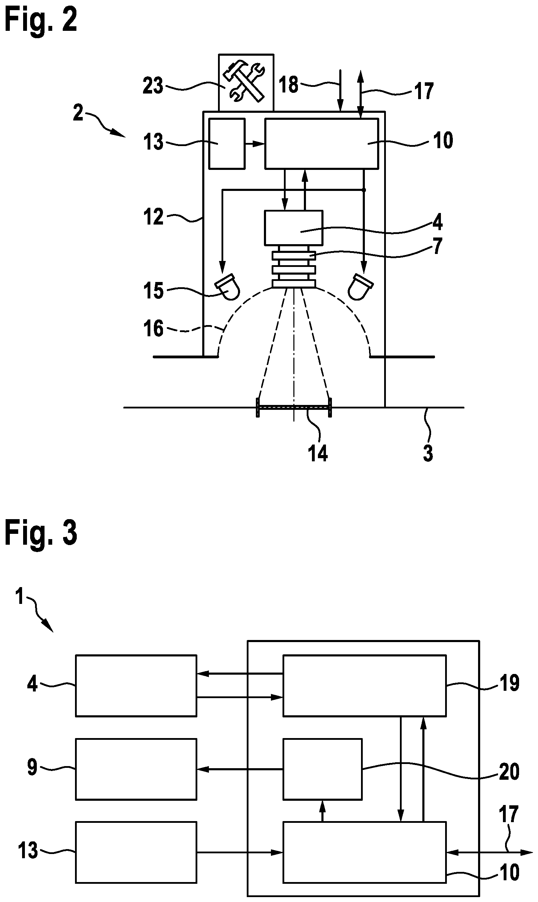

Figur 2 zeigt ein Schnittbild einer Sensoranlage 1 mit integrierter Elektronik. Das Funktionsmodul 2 umfasst ein Gehäuse 12, wobei in dem Gehäuse 12 die optische Sensoreinheit 4 mit optischer Abbildungseinheit 7, die Auswerteeinheit 10 und ein Inertialsensor 13 angeordnet sind. Ferner bildet die Kombination der optischen Sensoreinheit 4 mit einem Funktionstool 23 das Funktionsmodul, wobei das Funktionstool 23 eine Funktion/und oder Fähigkeit ausführen kann, wie zum Beispiel Halten, Klemmen oder Bohren.

Die optische Sensoreinheit 4, ist wie in Figur 1, als eine Kamera, insbesondere eine CCD-Kamera, mit Bildsensor ausgebildet. Die optische Abbildungseinheit 7 ist beispielsweise ein Objektiv und umfasst eine Blende, ein Linsensystem und einen optischen Filter. Die optische Abbildungseinheit 7 ist, ebenso wie in Figur 1, ausgebildet, die optischen Markierungen 6 des Markierungsbereiches 3 scharf und kontrastreich abzubilden. Insbesondere besitzt die optische Sensoreinheit 4 mit optischer Abbildungseinheit 7 eine Brennweite f. Ein im Markierungsbereich 3 angebrachter Maßstab 14, wobei der Maßstab 14 beispielsweise durch die optischen Markierungen 6 gebildet wird oder in den optischen Markierungen codiert ist, wird von der optischen Sensoreinheit 4 mit einer Brennweite f≠1 verzerrt, insbesondere vergrößert und/oder verkleinert, in dem Bild 5 abgebildet.

Ferner ist im Gehäuse 12 eine Beleuchtungseinheit 9 angeordnet. Die Beleuchtungseinheit 9 ermöglicht es, das Funktionsmodul 2 auch bei schlechter natürlicher Beleuchtung des Markierungsbereiches 3 verwenden zu können. Die Beleuchtungseinheit 9 kann im Dauerbetrieb und/oder im Blitzbetrieb verwendet werden. Insbesondere umfasst die Beleuchtungseinheit mindestens eine Leuchtdiode (LED) 15 als Leuchtmittel. Zur Verbesserung der Ausleuchtung des Markierungsbereiches 3 umfasst das Gehäuse 12 einen Streuschirm 16. Der Streuschirm 16 ist insbesondere als halbkugelförmiger teiltransparenter Streuschirm 16 ausgebildet. Vorzugsweise ist der Streuschirm 16 nach dem Prinzip einer Ulbricht-Kugel aufgebaut. So kann insbesondere eine schatten- und reflexfreie Aufnahme des Markierungsbereiches 3 durch die optische Sensoreinheit 4 gewährleistet werden. Zur Verbesserung der Abbildungsqualität umfasst das Funktionsmodul 2 zusätzlich ein Mittel zur Abschirmung von Fremdlicht, wobei dieses Mittel zur Abschirmung als eine Blende vor der optischen Abbildungseinheit 7 ausgebildet ist.

Im Gehäuse ist eine Auswerteeinheit 10 angeordnet, wobei die Auswerteeinheit 10 datentechnisch mit der optischen Sensoreinheit 4 verbunden ist. Die datentechnische Verbindung kann kabelgebunden oder kabellos ausgeführt sein, wobei die kabellose Verbindung beispielsweise über eine Funkverbindung herstellbar ist. Die optische Sensoreinheit 4 stellt das vom Markierungsbereich 3 aufgenommene mindestens eine Bild 5 der Auswerteeinheit 10 zu Verfügung. Die Auswerteeinheit 10 kann auf Basis des mindestens einen Bildes 5 die Position und/oder Lage des Funktionsmoduls 2 bestimmen.

In diesem Ausführungsbeispiel umfasst das Funktionsmodul 2 einen Inertialsensor 13 zur Bestimmung von Lagefreiheitsgraden. Der Inertialsensor 13 ist datentechnisch mit der Auswerteeinheit 10 verbunden. Für den Fall, dass die optischen Markierungen 6 des in dem Bild 5 aufgenommen Markierungsbereiches 3 verdeckt sind und/oder das Bild 5 aus anderen Gründen nicht auswertbar ist, ermöglicht der Inertialsensor 13 ein Bereitstellen von Ersatzlagedaten und/oder Ersatzpositionsdaten. Der Inertialsensor 13 ist insbesondere als ein Beschleunigungs- und/oder Drehratensensor ausgebildet.

Das Funktionsmodul 2 umfasst eine Datenschnittstelle 17 zur Kommunikation des Funktionsmoduls 2 mit andern derartigen Funktionsmodulen 2 und/oder einem übergeordneten Rechnersystem, sowie eine Versorgungsschnittstelle 18 zum Versorgung des Funktionsmodules 2 mit Strom. Insbesondere kann die Versorgungsschnittstelle 18 als eine Ladeschnittstelle für einen, in das Funktionsmodul 2 integrierten, Akku genutzt werden.

Figur 3 zeigt ein Blockschaltbild der Elektronik einer Sensoranlage 1. Kernelement der Elektronik ist die Auswerteeinheit 10, wobei die Auswerteeinheit 10 als Mikrokontroller zur Aufbereitung und zum Bereitstellen der Positions- und/oder Lageinformation ausgebildet ist. Die Sensoranlage 1 umfasst einen Framegrabber 19 zum Einlesen der bildhaften Sensordaten in den Speicher des Mikrocontrollers. Insbesondere kann der Framegrabber 19 Teil der optischen Sensoreinheit 4, wie zum Beispiel, der Kamera sein. Der Framegrabber 19 dient als Bindeglied, insbesondere als Datenbindeglied, zwischen optischer Sensoreinheit 4 und Auswerteeinheit 10. Die Kommunikation optische Sensoreinheit 4 - Framegrabber 19 - Auswerteeinheit 10 ist vorzugsweise in beide Richtungen möglich.

Die Sensoranlage 1 umfasst eine Treibereinheit 20 zur Ansteuerung der Beleuchtungseinheit 9. Die Treibereinheit 20 umfasst ferner einen Helligkeitssensor, der detektiert, ob die natürliche Helligkeit im Markierungsbereich 3 für eine kontrastreichen Aufnahme durch die optische Sensoreinheit 4 genügt. Bei zu niedriger natürlicher Helligkeit ist die Treibereinheit 20 ausgebildet, die Beleuchtungseinheit 9 anzusteuern, damit die Beleuchtungseinheit 9 den Markierungsbereich 3 beleuchtet. Die Auswerteeinheit 10 ist mit einem Inertialsensor 13 datentechnisch Verbunden, wobei der Inertialsensor 13 in dem Funktionsmodul 2 angeordnet ist. Der Inertialsensor 13 ist ausgebildet die Lage und/oder die Lageänderung des Funktionsmoduls 2 in bis zu sechs Freiheitsgraden zu bestimmen, wobei die sechs Freiheitsgrade drei translatorische Freiheitsgrade und drei rotatorische Freiheitsgrade umfassen.

Die Auswerteeinheit 10 ist ausgebildet, auf Basis der durch den Inertialsensor 13 bereitgestellten Daten die Lage und/oder Position des Funktionsmoduls 2, in dem Falle, dass das mindestens eine Bild 5 nicht auswertebar ist, als Ersatzlagedaten bereitzustellen.

Über eine Datenschnittstelle 17 können die Lage und/oder Positionsinformationen an einen übergeordneten Rechner und/oder an andere Funktionsmodule 2 übertragen werden. Insbesondere ist die Auswerteeinheit 10 ausgebildet für zwei datentechnisch verbundene Funktionsmodule 2, deren relative Lage zueinander und/oder relative Positionen zu bestimmen.

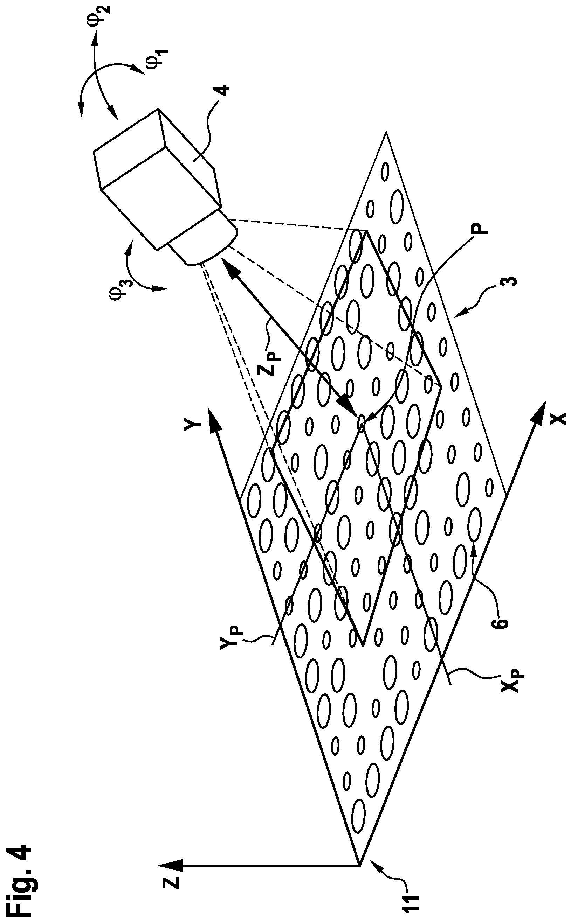

Figur 4 zeigt eine mögliche Anordnung der optischen Sensoreinheit 4 relativ zum Markierungsbereich 3. Der Markierungsbereich 3 bildet eine ebene Fläche, wobei die ebene Fläche gleichzeitig die x-y-Ebene des kartesischen Koordinatensystems 11 bildet. Senkrecht auf der x-y-Ebene des kartesischen Koordinatensystems 11 steht die z-Achse, wobei die Achsen x-y-z ein Rechtssystem bilden. Die Position des Funktionsmoduls 2 und/oder der optischen Sensoreinheit 4 ist in den Koordinaten (x, y, z) angebbar, wobei die optische Sensoreinheit 4 die Koordinaten $(x_k, y_k, z_k)$ besitzt. Neben den Koordinaten der Position $(x_k, y_k, z_k)$ sind zur Bestimmung der Lage der optischen Sensoreinheit 4 noch die Kippwinkel $(\phi_1, \phi_2, \phi_3)$ der optischen Sensoreinheit 4 nötig. Die Kippwinkel $\phi_1$ und $\phi_2$ sind die Kippwinkel der optischen Achse 8 der optischen Sensoreinheit 4 zur Oberflächennormalen der x-y-Ebene. Beispielsweise blickt die Kamera für $\phi_1 = \phi_2 = 0$ senkrecht auf den Markierungsbereich 3. Der Kippwinkel $\phi_3$ ist der Drehwinkel der optischen Sensoreinheit 4 um ihre optische Achse 8.

Die optische Achse 8 schneidet den Markierungsbereich 3 in einem Aufpunkt P. Der Aufpunkt P hat die Koordinaten $(x_P, y_P, 0)$. Der Vektor $Z_P$ beschreibt den Abstand der optischen Sensoreinheit 4 vom Markierungsbereich 3 entlang der optischen Achse 8. Die Auswerteeinheit 10 ist ausgebildet, die Koordinaten der optischen Sensoreinheit 4 $(x_k, y_k, z_k)$ aus den Koordinaten des Aufpunktes P und des Vektors $Z_P$ zu berechnen. Insbesondere erhält die Auswerteeinheit 10 die Koordinaten $(x_k, y_k, z_k)$ der optischen Sensoreinheit 4 durch Addition von Aufpunkt P $(x_P, y_P, 0)$ und dem Vektor $Z_P$.

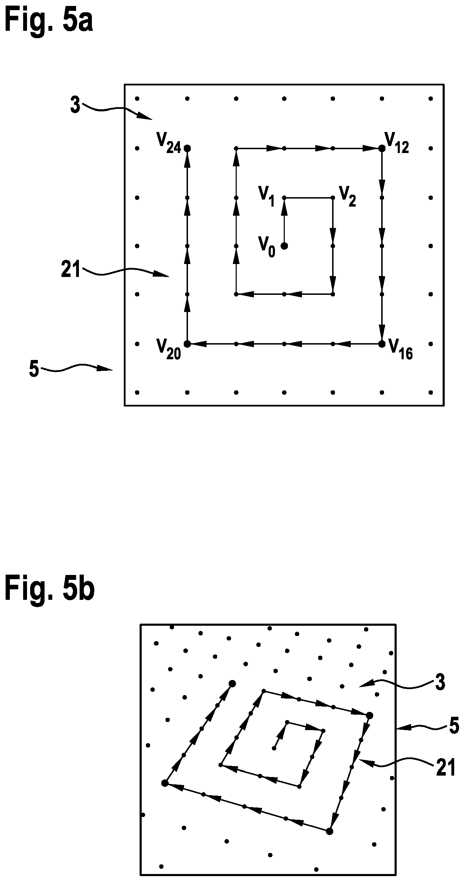

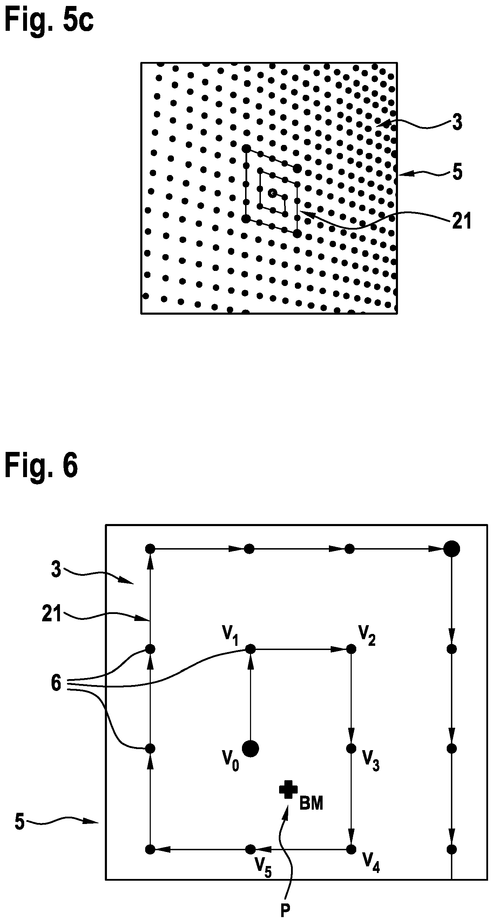

Die Figuren 5a, 5b und 5c zeigen Bilder 5 des Markierungsbereiches 3 für unterschiedliche Lageparameter mit gleichförmigen Punkten als optische Markierungen 6, die ein quadratisches Punktraster bilden

Figur 5a zeigt ein Bild des Markierungsbereiches für $(\phi_1 = 0, \phi_2 = 0, \phi_3 = 0)$und $Z_P=20$. Diese Parameter entsprechen einer senkrechten Draufsicht der optischen Sensoreinheit 4 auf den Markierungsbereich 3. Die senkrechte Draufsicht hat eine unverzerrte Abbildung der regelmäßigen Anordnung der optischen Markierungen 6 im Markierungsbereich 3 zur Folge.

Beispielhaft sind in den Figuren 5a, 5b und 5c immer dieselben mehreren optischen Markierungen 6 zu einem geometrischen Muster 21 verbunden. Für diese Parameter in Figur 5a bildet das geometrische Muster 21 eine Schneckenlinie mit rechteckiger Kontur.

Figur 5b zeigt den gleichen Markierungsbereich 21 aufgenommen von der optischen Sensoreinheit 4 für die Parameter $(\phi_1 = 45°, \phi_2 = 0, \phi_3 = 20°)$ und $Z_P=20$. Die Wahl der Winkel führt dazu, dass die optische Sensoreinheit 4 nicht mehr senkrecht auf den Markierungsbereich 3 blickt sondern schräg und so den Markierungsbereich 3 verzerrt im Bild 5 abbildet. Das geometrische Muster 21 ist weiterhin eine Schneckenlinie, jedoch bedingt durch den schrägen Blickwinkel der optischen Sensoreinheit 4 nun mit einer rautenförmigen Kontur.

Figur 5c zeigt ein Bild des Markierungsbereich 3 für den Fall, dass $(\phi_1 = 20°, \phi_2 = 45°, \phi_3 = 0$ und $Z_P=40$ gewählt ist. Die Wahl $Z_P$=40 bedeutet, dass die Sensoreinheit 4 weiter, insbesondere doppelt so weit, entfernt vom Markierungsbereich 3 angeordnet ist, als in den Figuren 5a und 5b. Die Wahl der Winkel führt dazu, dass die optische Sensoreinheit 4 schief auf den Markierungsbereich 3 blickt und das geometrische Muster 21 auch in diesem Fall statt eines Rechteckes eine Rautenform im Bild 5 aufweist.

Figur 6 zeigt ein beispielhaftes Bild 5, aufgenommen durch die optische Sensoreinheit 4. Die Auswerteeinheit 10 ist ausgebildet, die optischen Markierungen 6 als solche zu identifizieren und diese als zusammenhängende Objekte zu erkennen. Die Auswerteeinheit 10 umfasst ferner eine Grobauswerteeinheit, wobei die Grobauswerteeinheit ausgebildet ist, mindestens eine optische Markierung im Bild zu decodieren, in diesem Beispiel die optische Markierung 6 am Punkt $V_0$. Dazu ist in den optischen Markierungen 6 deren Position als Koordinaten codiert, so dass die decodierten optischen Markierungen 6 direkt als Koordinaten interpretiert werden können. Die Grobauswerteeinheit ist insbesondere zur Bestimmung der Koordinaten ($x_P$, $y_P$, 0) des Aufpunktes P auf Basis mindestens einer decodierten optischen Markierung 6 zu bestimmen. Da die optischen Markierungen 6 als zweidimensionale optischen Markierungen ausgebildet sind, kann die Auswerteeinheit 10 aus der Decodierung der optischen Markierungen 6 zusätzlich die Richtung der x- Achse und y-Achse bestimmen, so dass die Leserichtung der optischen Markierungen 6 auf 90 Grad genau bestimmbar ist.

Die Auswerteeinheit 10 umfasst eine Feinauswerteeinheit zum Bestimmen der Lage der optischen Sensoreinheit 4 auf Basis einer Aufnahmeperspektive der optischen Sensoreinheit 4 zum Markierungsbereich 3, den Koordinaten des Aufpunktes P und den Parametern der optischen Sensoreinheit 4, wie zum Beispiel der Brennweite f.

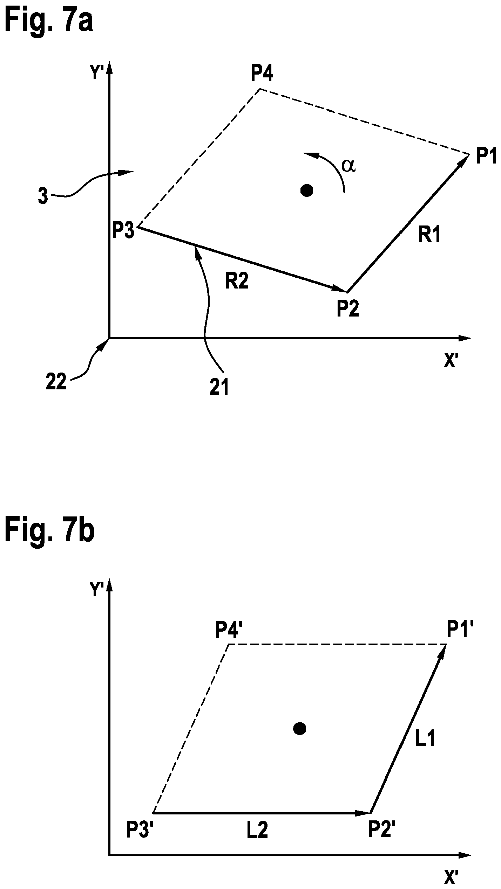

Abbildung 7a zeigt ein Bild 5 des Punktrasters mit vier optischen Markierungen 6, wobei die vier optischen Markierungen 6 an den Punkten $P_1$, $P_2$, $P_3$ und $P_4$ angeordnet sind. Das Bildkoordinatensystem 22 mit den Achsen x' und y' ist ein kartesisches Koordinatensystem mit den Bildkanten des Bildes 5 als x'- und y'-Achse. Die Auswerteeinheit 10 umfasst eine Mustererkennungseinheit zur Erfassung und/oder zum Suchen eines geometrischen Musters 21 im Bild 5 Markierungsbereich 3. Das Erkennen des geometrischen Musters 21 kann beispielsweise dadurch erfolgen, dass die Mustererkennungseinheit eine aufgefundene optische Markierung 6 mit den jeweils vier nächstliegenden optischen Markierungen 6 verbindet. Vorzugsweise wird, wie hier, als geometrisches Muster 21 ein Viereck gewählt, dass sich durch Verbinden der vier nächstgelegenen optischen Markierungen 6 ergibt. Die Figur 6a zeigt ferner einen Verbindungsvektor R1, der die Punkte P1 und P2 verbindet. Zusätzlich ist ein Verbindungsvektor R2 eingezeichnet, der die Punkte P3 und P2 verbindet.

Der Vektor $Z_P$ kann durch Vergleich eines Maßstabes 14 im Markierungsbereich 3 mit dem im Bild 5 abgebildeten Maßstabes 14 berechnet werden. Als Maßstab 14 kann beispielsweise der Vektor R1 oder R2 verwendet werden und/oder die Länge und/oder Breite einer optischen Markierung 6 genutzt werden. Die Bestimmung des Vektors $Z_P$ erfolgt auf Grundlage des Abbildungsgesetzes, dass in Zentralperspektive die Größe einer Abbildung mit Zunahme von $Z_P$ abnimmt. Die Auswerteeinheit 10 umfasst beispielsweise einen Parameter b, wobei der Parameter b die Länge des Maßstabes 14 im Markierungsbereich 3 beschreibt.

Durch Vergleich der Vektoren R1 und R2 mit dem Parameter b ist der Vektor $Z_P$ bestimmbar. Insbesondere ist $Z_P$ bestimmbar als $Z_P$=f/b' wobei b' die Länge von b in dem mindestens einen Bild 5 bzw. im Bildkoordinatensystem 22 beschreibt. Zur Berechnung des benötigte Basisabstand b' sei auf Figur 7b verwiesen.

In Figur 7b ist das geometrische Muster 21 aus Figur 7a um einen Winkel $\alpha$ gedreht, so dass der Vektor R2 aus Figur 7b parallel zur x'-Achse liegt. Durch die Drehung wird R1 mit den Vektorkomponenten ($x'_{R1}$, $y'_{R1}$) zu L1 mit ($x'_{L1}$, $y'_{L1}$) und R2 mit den Vektorkomponenten ($x'_{R2}$, $y'_{R2}$) zu L2 mit ($x'_{L2}$, $y'_{L2}$).

Der Basisabstand b' im Bildkoordinatensystem ergibt sich aus den Vektoren L1 und L2 als:

$$b' = \sqrt{\frac{1}{2}\left(x_{L1}^2 + x_{L2}^2 + y_{L1}^2 + \sqrt{x_{L1}^4 + x_{L2}^4 + y_{L1}^4 + 2x_{L1}^2 x_{L2}^2 + 2x_{L1}^2 y_{L1}^2 - 2x_{L2}^2 y_{L1}^2}\right)} \quad (1)$$

Die Winkel ($\phi_1$, $\phi_2$, $\phi_3$) können durch Auswertung von Figur 6 bestimmt werden. Insbesondere ergeben sich die Winkel als.

$$\phi_1 = \arccos\sqrt{1 + \frac{y'^2_{R1} + y'^2_{R2} - b'^2}{x'^2_{R1} + x'^2_{R2}}} \quad (2)$$

$$\phi_2 = \arccos\sqrt{\frac{x'^2_{R1} + x'^2_{R2}}{b'}} \quad (3)$$

$$\phi_3 = \arctan \frac{x'_{R1}}{x'_{R2}} \qquad\qquad (4)$$

Vorzugsweise umfasst die Auswerteeinheit 10 ein Computerprogramm und/oder einen Algorithmus mit Programmcode-Mitteln zur Durchführung eines Lagebestimmungsverfahrens zum Bestimmen der Lage der Sensoreinheit 4 bezüglich des Markierungsbereiches 3 in sechs Freiheitsgraden, wenn das Computerprogramm auf einem Computer und/oder Rechner ausgeführt wird.

Das Lagebestimmungsverfahren wertet das mindestens eine Bild 5 aus, wobei das mindestens eine Bild 5, beispielsweise durch eine Filterung und/oder Normierung zum Robustifizieren nachfolgender Verfahrensschritte vorverarbeitet werden kann. In einem Identifikationsschritt werden Symbole, optische Markierungen und/oder optische Codes im mindestens einem Bild als zusammenhängende Objekte mit einer Schwerpunktposition im Bild identifiziert. Vorzugsweise wird eine Blobanalyse angewandt, welche für jedes Symbol ein Blob erkennt, wobei die Positions- und Flächenwerte der Blobs in einer Blob-Liste in einem Speicher abgelegt werden. Insbesondere umfasst eine optische Markierung und/oder optischer Code mehrere Blobs.

In einem Startpunktschritt wird der Startpunkt $V_0$ als der Blob und/oder die optische Markierung 6 gesucht, welche dem Bildmittelpunkt BM am nächsten liegt (Figur 6). Ausgehend von $V_0$ wird der Blob $V_1$ bestimmt, welcher am nächsten zu $V_0$ ist. Aus $V_0$ und $V_1$ werden die Einheitsvektoren $E_N$ und $E_0$ bestimmt, wobei $E_N = V_1 - V_0$ und $E_0$ der im Uhrzeigersinn gedrehte $E_N$ ist. Darauf wird der zu $V_1 + E_0$ nächstgelegene Blob gesucht und dessen Position $V_2$ bestimmt. Basierend auf $V_2$ wird $E_N$ nachkorrigiert durch $E_N = V_2 - V_1$. Im Weiteren werden sukzessive die nächstkommenden Blobs an den Stellen $V_i - E_i$ bestimmt, wobei i Element der natürlichen Zahlen ist. Die Suche der Blobs erfolgt in die Richtungen $N=E_N$, $S=-E_N$, $O=E_O$ und $W=-E_O$. Beispielsweise ist die Suchreihenfolge für i=2 bis 23 in Figur 5a dargestellt mit S, S, W, W, N, N, N, O, O, O, S, S, S, S, W, W, W, W, N, N, N, N.

In einem darauf folgenden Grobpositionsbestimmungsschritt bestimmt die Auswerteeinheit 10 die Grobposition $(X_G, Y_G)$ die in dem optischen Code des mindestens einen Bildes 5 enthalten ist. Dazu werden die Symbole an den Positionen $V_0$ bis $V_{24}$ als Ziffern interpretiert und in der gemäß einer Codierungsvorschrift vorgesehenen Reihenfolge gelesen. Nach der Übersetzung des Codes liegt die Grobposition $(X_G, Y_G)$ vor, wobei die Grobposition ein ganzzahliges Vielfaches des Basisabstandes b ist. Außerdem liegt die Information vor, in welche Raumrichtung x und y sich die Leserichtungen des optischen Codes erstrecken.

Daran schließt sich ein Feinpositionsbestimmungsschritt zur Bestimmung der Feinposition $(X_F, Y_F)$, wobei diese Bestimmung durch Lagevermessung des Bildmittelpunktes BM zur Position $V_O$ erfolgt. Diese Messung wird im Bildkoordinatensystem 22 durchgeführt. Die Koordinaten des Aufpunktes $(X_P, Y_P, 0)$ ergeben sich dann als $X_P = b(X_G + X_F)$ und $Y_P = b(Y_G + Y_F)$.

An den Feinpositionsbestimmungsschritt schließt sich der Basislängenbestimmungsschritt zur Bestimmung der Basislänge b' im Bildkoordinatensystem 22. Die Ecken des optischen Codes, des geometrischen Musters und/oder des Messfeldes bilden in der Markierungsebene beispielsweise ein Quadrat und im mindestens einen Bild 5 bedingt durch die Zentralperspektive ein allgemeines Parallelogramm. Beispielsweise sind in Figur 5a diese Ecken an den Punkten $V_{12}$, $V_{16}$, $V_{20}$ und $V_{24}$. Die Verzerrung wird beseitigt, indem ein angenähertes Parallelogramm bestimmt wird, wobei die Diagonalen $D_1$ und $D_2$ des angenäherten Parallelogramms berechnet werden als $D_1 = V_{12} - V_{20}$ und $D2 = V_{24} - V_{16}$. Die Eckpunkte des Parallelgramms $P_1$, $P_2$, $P_3$ und $P_4$ werden berechnet als $P_1 = V_0 + 0,5*D_1$, $P_2 = V_0 - 0,5*D_2$, $P_3 = V_0 - 0,5*D_1$ und $P_4 = V_0 + 0,5*D_2$.

Daran schließt sich ein Endberechnungsschritt an zur Berechnung von $Z_P$ und von $(\phi_1, \phi_2, \phi_3)$. Zur Berechnung von $Z_P$ wird die Tatsache genutzt, dass bei Betrachtung eines Abbildes im Markierungsbereich in Zentralperspektive die Größe des Abbildes mit dem Abstand $Z_P$ abnimmt. Ein bekanntes Maß im Markierungsbereich ist der Raster-Abstand b. Das äquivalente Maß im mindestens einen Bild ist b' und wird aus den Eckpunkten $P_1$, $P_2$, $P_3$, $P_4$ des zuvor ermittelten Parallelogramms berechnet. Als Zwischengrößen werden hierzu die Größen $L_1$ und $L_2$ (Figur 7b) herangezogen. Die Größen $L_1$ und $L_2$ werden durch Drehen des Parallelogramms mit den Ecken $P_1$, $P_2$, $P_3$ und $P_4$ und Kanten $R_2$ und $R_1$ erhalten, wobei das Parallelogramm mit $P_1$, $P_2$, $P_3$ und $P_4$ so gedreht wird, dass die Kante $R_2$ nach der Drehung parallel zur x'-Achse ist. Im Endberechnungsschritt wird b' nach Formel (1) berechnet:

Ferner wird im Endberechnungsschritt die Koordinate $Z_P$ errechnet als $Z_P=f/b'$. Der Faktor f kann einmalig ermittelt und abgespeichert werden, zum Beispiel auf Basis der Daten des Abbildungssystems oder durch einen Kalibriervorgang.

In Endberechnungsschritt werden die Winkelkoordinaten $\phi_1$ gemäß Formel (2), $\phi_2$ gemäß Formel (3) und $\phi_3$ gemäß Formel (4) berechnet:

Bei kleinen Winkeln von $\phi_1$ und $\phi_2$, etwa von -20° bis 20°, können - je nach Qualität der Messdaten genauere Werte nach einem anderen Verfahren berechnet werden, das auf der Auswertung der zentralperspektivischen Abbildung beruht und auch das Vorzeichen der Winkel liefert. Dazu wird der Winkel $\gamma_1$ ermittelt, den die Geraden von $V_{16}$ nach $V_{12}$ und von $V_{20}$ nach $V_{24}$ im Bildfeld einschließen sowie $\gamma_2$ als Winkel zwischen den Geraden von $V_{20}$ nach $V_{16}$ und von $V_{24}$ nach $V_{12}$. Aus diesen Winkeln werden die Ersatzwinkel $\phi_1$' und $\phi_2$' berechnet: $\phi_1' = c_1*\gamma_1/b'$ und $\phi_2' = c_2*\gamma_2/b'$. Die

Konstanten $c_1$ und $c_2$ werden durch Kalibrierung bestimmt. Im Bereich um 0° werden die Ersatzwinkel $\phi_1'$ und $\phi_2'$ verwendet, darüber hinaus die Winkel $\phi_1$ und $\phi_2$, mit dem Vorzeichen von $\phi_1'$ und $\phi_2'$. Ferner wird im Endberechnungsschritt die Winkelinformation auf den vollen Winkelbereich von 0° bis 360° ergänzet, indem die vorher gewonnene Information über die in Schritten von 90° ermittelte Leserichtung genutzt wird.

**Patentansprüche**

1. Sensoranlage (1)
mit einer Auswerteeinheit (10) und einem Markierungsbereich (3),
mit mindestens einer optischen Sensoreinheit (4) ausgebildet zur Aufnahme mindestens eines Bildes (5) des Markierungsbereichs (3) mit optischen Markierungen (6),
wobei die optischen Markierungen (6) Positionsinformationen zu ihrer Position im Markierungsbereich (3) umfassen,
wobei die Auswerteeinheit (10) ausgebildet ist, auf Basis des mindestens einen Bildes (5) die Lage der optischen Sensoreinheit (4) bezüglich des Markierungsbereichs (3) in sechs Lagefreiheitsgraden zu bestimmen,
wobei die Auswerteeinheit (10) eine Grobauswerteeinheit ausgebildet zum Auslesen der Positionsinformationen von mindestens einer optischen Markierung (6) im aufgenommenen Bild (5) und zum Bereitstellen der Positionsinformationen umfasst, wobei die Positionsinformationen die Koordinaten der Position der jeweiligen optischen Markierung im Markierungsbereich (3) umfassen,
wobei die Auswerteeinheit (10) eine Mustererkennungseinheit ausgebildet zur Erfassung und/oder zum Suchen eines geometrischen Musters (21) aus mindestens einer optischen Markierung (6) in dem mindestens einen Bild (5) umfasst,
wobei die Auswerteeinheit (10) eine Abstandsauswerteeinheit umfasst und die optische Sensoreinheit (4) eine optische Abbildungseinheit (7) mit Brennweite f umfasst, wobei die Abstandsauswerteeinheit (10) ausgebildet ist, den Abstand der optischen Sensoreinheit (4) zum Markierungsbereich (3) auf Basis einer Verzerrung und eines Abbildungsmaßstabs des geometrischen Musters (21) in dem mindestens einen Bild (5) und der Brennweite f zu bestimmen,
wobei die Auswerteeinheit (10) eine Winkelbestimmungseinheit ausgebildet zur Bestimmung der rotatorischen Freiheitsgrade der optischen Sensoreinheit (4) bezüglich des Markierungsbereich (3) auf Basis einer Verzerrung des geometrischen Musters (21) in dem mindestens einen Bild (5) umfasst.

2. Sensoranlage (1) nach Anspruch 1, wobei die Auswerteeinheit (10) eine Feinauswerteeinheit zur Bestimmung der Lage der optischen Sensoreinheit (4) auf Basis einer Aufnahmeperspektive der optischen Sensoreinheit (4) auf den Markierungsbereichs (3) in dem Bild (5) umfasst.

3. Sensoranlage (1) nach Anspruch 2, wobei die Sensoreinheit (4) eine optische Achse (8) definiert und die optische Achse (8) den Markierungsbereich (3) in einem Aufpunkt (P) schneidet, wobei die Feinauswerteeinheit ausgebildet ist, die Lage der optischen Sensoreinheit (4) auf Basis der Lage des Aufpunktes (P) relativ zu einer optischen Markierung (6) in dem mindestens einen Bild (5) zu bestimmen.

4. Sensoranlage (1) nach einem der vorhergehenden Ansprüche, wobei die optische Sensoreinheit (4) eine Beleuchtungseinheit (9) zur Beleuchtung des Markierungsbereichs (3) und/oder eines Teiles des Markierungsbereiches (3) bei der Aufnahme des mindestens einen Bildes (5) umfasst.

5. Sensoranlage (1) nach einem der vorhergehenden Ansprüche, wobei die optische Sensoreinheit einen Inertialsensor (13) zur Bereitstellung der Lage bei Detektionsproblemen der optischer Sensoreinheit (4) und/oder zur Bereitstellung einer interpolierten Lage zwischen zwei von der optischen Sensoreinheit aufgenommen Bildern umfasst.

6. Sensoranlage (1) nach einem der vorhergehenden Ansprüche, wobei die optischen Markierungen (6) die Positionsinformationen als optischen Code umfassen.

7. Sensoranlage (1) nach einem der vorhergehenden Ansprüche, wobei die optische Markierung (6) einen Dotcode bildet.

8. Sensoranlage (1) nach einem der Ansprüche 6 oder 7, wobei mindestens ein optischer Code das geometrische Muster (21) bildet.

9. Automatisierungsanlage mit mindestens einer Sensoranlage (1) nach einem der vorhergehenden Ansprüche und mit mindestens einem Funktionsmodul (2) zur Durchführung von mindestens einer Funktion, wobei die Auswerteeinheit (10) ausgebildet ist, auf Basis des mindestens einen Bildes (5) die Lage des Funktionsmoduls bezüglich des Markierungsbereichs (3) in sechs Lagefreiheitsgraden zu bestimmen.

**10.** Automatisierungsanlage nach Anspruch 9, wobei die optische Sensoreinheit (4) im Funktionsmodul (2) angeordnet ist.

**Claims**

**1.** Sensor installation (1)
comprising an evaluation unit (10) and a marking region (3),
comprising at least one optical sensor unit (4) embodied to record at least one image (5) of the marking region (3) with optical markings (6),
wherein the optical markings (6) comprise position information in relation to their position in the marking region (3),
wherein the evaluation unit (10) is embodied to determine the relative position of the optical sensor unit (4) in relation to the marking region (3) in six spatial degrees of freedom on the basis of the at least one image (5),
wherein the evaluation unit (10) comprises a rough evaluation unit embodied to read out the position information from at least one optical marking (6) in the recorded image (5) and to provide the position information, wherein the position information comprises the coordinates of the position of the respective optical marking in the marking region (3),
wherein the evaluation unit (10) comprises a pattern identification unit embodied to capture and/or search for a geometric pattern (21) from at least one optical marking (6) in the at least one image (5),
wherein the evaluation unit (10) comprises a distance evaluation unit and the optical sensor unit (4) comprises an optical imaging unit (7) with a focal length f, wherein the distance evaluation unit (10) is embodied to determine the distance between the optical sensor unit (4) and the marking region (3) on the basis of a distortion and an imaging scale of the geometric pattern (21) in the at least one image (5) and the focal length f,
wherein the evaluation unit (10) comprises an angle determination unit embodied to determine the rotational degrees of freedom of the optical sensor unit (4) in respect of the marking region (3) on the basis of a distortion of the geometric pattern (21) in the at least one image (5).

**2.** Sensor installation (1) according to Claim 1, wherein the evaluation unit (10) comprises a fine evaluation unit for determining the relative position of the optical sensor unit (4) on the basis of a recording perspective of the optical sensor unit (4) in relation to the marking region (3) in the image (5).

**3.** Sensor installation (1) according to Claim 2, wherein the sensor unit (4) defines an optical axis (8) and the optical axis (8) intersects the marking region (3) at a reference point (P), wherein the fine evaluation unit is embodied to determine the relative position of the optical sensor unit (4) on the basis of the relative position of the reference point (P) relative to an optical marking (6) in the at least one image (5).

**4.** Sensor installation (1) according to any one of the preceding claims, wherein the optical sensor unit (4) comprises an illumination unit (9) for illuminating the marking region (3) and/or a part of the marking region (3) when recording the at least one image (5).

**5.** Sensor installation (1) according to any one of the preceding claims, wherein the optical sensor unit comprises an inertial sensor (13) for providing the relative position in the case of detection problems of the optical sensor unit (4) and/or for providing an interpolated relative position between two images recorded by the optical sensor unit.

**6.** Sensor installation (1) according to any one of the preceding claims, wherein the optical markings (6) comprise the position information as an optical code.

**7.** Sensor installation (1) according to any one of the preceding claims, wherein the optical marking (6) forms a dot code.

**8.** Sensor installation (1) according to either of Claims 6 and 7, wherein at least one optical code forms the geometric pattern (21).

**9.** Automation installation comprising at least one sensor installation (1) according to any one of the preceding claims and comprising at least one functional module (2) for carrying out at least one function, wherein the evaluation unit (10) is embodied to determine the relative position of the functional module in respect of the marking region (3) in six spatial degrees of freedom on the basis of the at least one image (5).

**10.** Automation installation according to Claim 9, wherein the optical sensor unit (4) is arranged in the functional module (2).

**Revendications**

**1.** Équipement de détection (1),
comprenant une unité d'interprétation (10) et une zone de marquage (3),
comprenant au moins une unité de détection optique (4) configurée pour enregistrer au moins une image (5) de la zone de marquage (3) avec des marquages optiques (6),
les marquages optiques (6) comprenant des informations de position à propos de leur position dans la zone de marquage (3),
l'unité d'interprétation (10) étant configurée pour, en se basant sur l'au moins une image (5), déterminer la position de l'unité de détection optique (4) par rapport à la zone de marquage (3) en six degrés de liberté de position,
l'unité d'interprétation (10) comprenant une unité d'interprétation approximative, configurée pour lire les informations de position d'au moins un marquage optique (6) dans l'image (5) enregistrée et pour fournir les informations de position, les informations de position comprenant les coordonnées de la position du marquage optique respectif dans la zone de marquage (3),
l'unité d'interprétation (10) comprenant une unité de reconnaissance de modèle, configurée pour détecter et/ou pour rechercher un modèle géométrique (21) à partir d'au moins un marquage optique (6) dans l'au moins une image (5),
l'unité d'interprétation (10) comprenant une unité d'interprétation de distance et l'unité de détection optique (4) comprenant une unité de représentation optique (7) ayant une distance focale f, l'unité d'interprétation de distance (10) étant configurée pour déterminer la distance entre l'unité de détection optique (4) et la zone de marquage (3) en se basant sur une distorsion et une échelle de représentation du modèle géométrique (21) dans l'au moins une image (5) et la distance focale f,
l'unité d'interprétation (10) comprenant une unité de détermination d'angle, configurée pour déterminer le degré de liberté en rotation de l'unité de détection optique (4) par rapport à la zone de marquage (3) en se basant sur une distorsion du modèle géométrique (21) dans l'au moins une image (5).

**2.** Équipement de détection (1) selon la revendication 1, l'unité d'interprétation (10) comprenant une unité d'interprétation précise destinée à déterminer la position de l'unité de détection optique (4) en se basant sur une perspective d'enregistrement de l'unité de détection optique (4) sur la zone de marquage (3) dans l'image (5).

**3.** Équipement de détection (1) selon la revendication 2, l'unité de détection (4) définissant un axe optique (8) et l'axe optique (8) croisant la zone de marquage (3) en un point spatial (P), l'unité d'interprétation précise étant configurée pour déterminer la position de l'unité de détection optique (4) en se basant sur la position du point spatial (P) par rapport à un marquage optique (6) dans l'au moins une image (5).

**4.** Équipement de détection (1) selon l'une des revendications précédentes, l'unité de détection optique (4) comprenant une unité d'éclairage (9) destinée à éclairer la zone de marquage (3) et/ou une partie de la zone de marquage (3) lors de l'enregistrement de l'au moins une image (5).

**5.** Équipement de détection (1) selon l'une des revendications précédentes, l'unité de détection optique comprenant un capteur inertiel (13) destiné à fournir la position en cas de problèmes de détection de l'unité de détection optique (4) et/ou destiné à fournir une position interpolée entre deux images enregistrées par l'unité de détection optique.

**6.** Équipement de détection (1) selon l'une des revendications précédentes, les marquages optiques (6) comprenant les informations de position sous la forme d'un code optique.

**7.** Équipement de détection (1) selon l'une des revendications précédentes, le marquage optique (6) formant un code 2D.

**8.** Équipement de détection (1) selon l'une des revendications 6 ou 7, au moins un code optique formant le modèle géométrique (21).

9. Équipement d'automatisation comprenant au moins un équipement de détection (1) selon l'une des revendications précédentes et comprenant au moins un module fonctionnel (2) destiné à accomplir au moins une fonction, l'unité d'interprétation (10) étant configurée pour, en se basant sur l'au moins une image (5), déterminer la position du module fonctionnel par rapport à la zone de marquage (3) en six degrés de liberté de position.

10. Équipement d'automatisation selon la revendication 9, l'unité de détection optique (4) étant disposée dans le module fonctionnel (2).

**Fig. 1**

$(x_K, y_K, z_K)$

EP 3 290 861 B1

# Fig. 2

# Fig. 3

Fig. 4

# Fig. 5a

# Fig. 5b

## Fig. 5c

## Fig. 6

# Fig. 7a

# Fig. 7b

**IN DER BESCHREIBUNG AUFGEFÜHRTE DOKUMENTE**

**In der Beschreibung aufgeführte Patentdokumente**

- DE 102008042261 A1
- US 4753569 A
- US 20150025683 A1
- EP 2511656 A1
- DE 102011011360 A1